# EUROPEAN PATENT APPLICATION

(11) **EP 2 549 709 A1**
(43) Date of publication of application: **23.01.2013**
(21) Application number: 11250669.6
(22) Date of filing: 21.07.2011
(51) Int. Cl.: H04L 29/06, H04L 29/12

(54) **Address allocation system**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

A data network comprising a plurality of addressable nodes (100), an addressing system (16) for generating network addresses for the nodes, has a database (18) of node-specific data relating to the addressable nodes, and an encryption system (39) to encrypt the node-specific data in the database (18) as part of the address generation system (16) is arranged to incorporate the encrypted node-specific data as part of a network address, allowing the node-specific data to be made available to users (33, 43, 53) in communication with the respective node only if they have been authorised to do so, by being provided with the appropriate decryption code.

## Description

This invention relates to addressing systems for data networks such as those operating under the "Internet Protocol" (IP). It is recognised that many addressing systems developed for the use of routing of communications, such as telephone dialling codes, postal codes, etc are also of more general use. For example, the telephone dialling code system, although primarily intended to control the switching system that connects a caller to a calling party, typically has an element allocated according to factors such as the type of connection (fixed or mobile), geographic location, charging rate, or the type of user - (e.g the 0300 codes for government services in the UK). Similarly, postal codes, although primarily intended for the mechanised sorting of mail, can be used to identify the geographical location of the premises to which the postcode applies. Indeed, many such coding systems are designed such that this information is apparent to the general user, as an "aide-memoire" for a person presenting it, or as an indicator of location to a person reading it.

Packet switched communications systems such as those operating under the Internet Protocol also have addressing systems. The Internet Protocol uses a two level addressing system. At the first level, a "user-friendly" universal resource location (url) can be associated with a given user. The url can have almost any free text form, within certain formatting constraints, and usually includes a country code, for example ".uk" for a United Kingdom user. However, such codes are almost completely independent of the actual switching topology, and one url may, at different times, direct to very different locations. Actual switching is performed by translating the url into an "IP address". The IP address is used by individual nodes in the network to route packets of data to their intended destinations, using routing tables which match each address (or more usually a block of addresses) to a specific forwarding node.

Various blocks of IP addresses are allocated to specific purposes or operators, but this is primarily for ease of allocation, and these blocks have little or no significance to the human users. In particular, it should be noted that a network address will depend on factors such as the network operator, access technology (fixed or mobile) and, for a mobile user, whether a proxy address is in use, and thus the network topology does not map easily onto geographical location.

Mobile IP enables a device to keep the same IP address as it moves from one attachment point to another. Packets for the device arrive at a home agent identified by the user's "persistent" IP address, which creates a tunnel to a "foreign" agent having a "care of' address associated with visitors to the network to which the target device is currently connected. The home agent also tells the data sender to thereafter send data directly to the foreign agent, thereby cutting the home agent out of the communication path. There are therefore two addresses associated with a mobile device, namely the "persistent" home address, and the "care of' address associated with its current location.

It is not generally possible to determine anything other than the user's Internet Service Provider (and therefore usually the country in which the user is located) from an IP address, as most of the number string appears random, and can be changed every time the user begins a new session. Even the service provider has to go through a fairly convoluted process to determine the location of one of its customers based on the IP address alone. For this reason, most internet service providers recommend that emergency telephone calls (e.g. 999, 112, 911 depending on country) not be made using VoIP (Voice over Internet Protocol) if an alternative landline or cellular phone is available.

According to the invention, there is provided a data network comprising a plurality of addressable nodes, an addressing system for generating network addresses for the nodes, a database of node-specific data relating to the addressable nodes, and an encryption system to encrypt the node-specific data in the database, wherein the address generation system is arranged to incorporate the encrypted node-specific data as part of a network address.

According to a second aspect, the invention provides a method for generating network addresses for a plurality of addressable nodes, wherein a database of user data relating to the addressable nodes is maintained, and wherein each network address includes an encrypted version of the user data for the respective node.

According to a third aspect, there is provided a method for recovering user data specific to a network node and encrypted as part of a network address for the network node, by decrypting a network address received from a requesting server, in order to retrieve the node-specific data.

The encryption process can be constrained such that the encrypted data is in the format of a unique IP address falling within a range allocated to the service provider.

In this specification, the term "encoding" is used to mean the application of a procedure to convert information held in one representation to another, in particular a representation in a specific format. "Encryption" - of which enciphering is an example - is the application of a cryptographic transform (a cipher / encryption algorithm) usually combined with an encryption key to convert intelligible information (plain text) in to an unintelligible form (cipher text) which is not readily usable by any party without knowledge of the encryption algorithm and decryption key.

This invention allows encrypted data relating to a network node to be incorporated as part of the network address of that node, such that the data can only be retrieved by parties who have been provided with a cipher to decrypt the information. Provision can be made for protecting the privacy of users who do not consent to such information being made available even in encrypted format, as will be described in detail later.

The invention has a number of potential applications that could benefit users. Firstly, user-specific information could be embedded within the encrypted IP address. An example of this would be to allow the authorities that operate emergency services, on receiving a call to through a voice over IP (VoIP) telephone service, to identify the precise location of the caller.

Secondly, a different cipher could be used in addition to, or instead of, the first application to embed broader (less specific) user information in the encrypted IP address, subject to the acceptability to users, on a general or individual basis, of such information being made available in this way.

Such information may be of potential value to the information service provider, to allow it to better serve its customers when they interact online by automatically providing users with content, or a format, more appropriate to their interests or telecommunication capabilities. Such information could include data relating to the user's connection type, approximate geographic location, customer records, special needs, whether they are a personal or business customer and, if the latter, what type of business they operate

The information could also be made available to trusted and approved third parties, subject to any required user consent, but as it is encrypted it would remain protected by a resilient cipher.

The user to whom the IP address is allocated, and the operators of any intermediate nodes in the internet outside the control of the network operator allocating the IP address, do not need to know the cipher: to the general user, and to anyone else who does not have access to the cipher, the IP address identifies his current "point of presence", and operates for routing purposes as normal.

To deter unauthorised access to the encrypted data, provision may be made to periodically change the cipher in use. However, individual users normally only acquire a new network address when they connect to the network after a period of disconnection, or on handover in the case of a mobile unit. Typically, more than one encryption system would be current at any given time, depending on when each user initiated his current internet session. To allow for this, part of each address may include an indication of which version of the encryption process was used for that address.

In operation the service provider would create a "notional" number, part of which is a string referencing customer data, for example postcode data, known to the service provider. The service provider then applies a cipher designed so that the notional number, when encrypted, produces an allocatable IP address meeting any addressing constraints applicable to the service provider. For example a user-specific identity prefix would be excluded from the encipherment. The actual IP address that results from this process can then be allocated to the user. Apart from the identity prefix, this IP address will have no significance to most users, as a result of the encryption.

Authorised users of the cipher can use it to retrieve the "notional" number and therefore the associated user data. This can be used for an authorised information provider provided with the cipher to provide more relevant content in response to a data request originating at the network address, for example to assist identification of a user contacting the emergency services, or to identify any special factors which may allow the content requested, or the form it is presented, to be tailored to the individual user.

It would be possible to encrypt different items of data, or different levels of the same data, each having its own cipher. For example, two (or more) levels of granularity could be provided, with separate ciphers for each level of detail, such that some users are permitted access only to the coarsest level using one cipher, whilst others can also be given a second cipher to allow a more-detailed level to be decrypted.

The cipher does not need to be known to individual routers within the network, because the IP address itself is not encrypted. Therefore it is not necessary for service providers to share ciphers - routing of packets through the data network is done using standard routing tables, based on the advertised IP address. The cipher, and therefore the encrypted data, need only be disclosed to users who need the data that has been encrypted in the network address.

An embodiment of the invention will now be described, by way of example, with reference to the drawings, in which
Figure 1 is a schematic depiction of the general arrangement of a Point of Presence platform incorporating the invention
Figure 2 is a depiction of a typical IPv6 IP address string.
Figures 3, 4 and 5 illustrate three alternative methods by which the invention may be used to provide user-specific data.

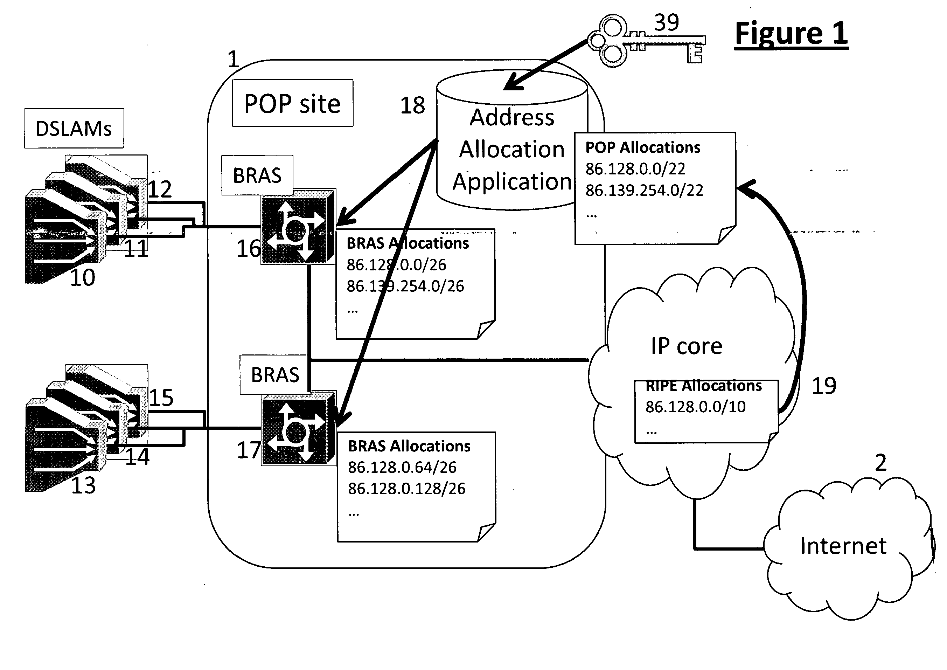

Figure 1 is a schematic depiction of the general arrangement of a Point of Presence platform 1 incorporating the invention. Each customer's fixed line is connected to a DSLAM (Digital Subscriber Line Access Multiplexer) 10, physically close to the customer, which in turn connects to a BRAS (Broadband Remote Access Server) 16 within the POP platform 1. The POP platform may, as shown, comprise more than one BRAS 16, 17. Each BRAS 16, 17 receives traffic for multiple DSLAMs 10, 11, 12; 13, 14, 15, and is responsible for identifying each customer terminal and allocating an IP address to it. The BRAS 16, 17 are, in effect, the customers' Points of Presence on the network.

The BRAS 16, 17 are connected to the service provider's core network 19 and thus, through inter-operator connections, to the rest of the Internet 2.

Each BRAS is assigned a pool of addresses drawn from larger allocations made to the service provider by a regional Internet Registry such as the RIPE (Réseaux IP Européens) Network Coordination Centre, the African Network Information Centre (AfriNIC), the American Registry for Internet Numbers (ARIN), the Asia-Pacific Network Information Centre (APNIC) and the Latin American and Caribbean Network Information Centre (LACNIC). The internet registry allocates address blocks to the network provider. All the addresses in such a block have a common prefix which therefore identifies the network provider.

The network provider can allocate the individual addresses in the block to meet its own requirements. In the present embodiment, the service provider splits the allocation into smaller blocks and allocates these to its individual POP sites.

In the embodiment of Figure 1, the Address manager 18 in the POP site 1 splits each block into still smaller blocks and allocates these to individual BRAS 10, 11, 12, 13, 14, 15. The Address manager can reallocate address blocks between the BRAS under its control according to demand.

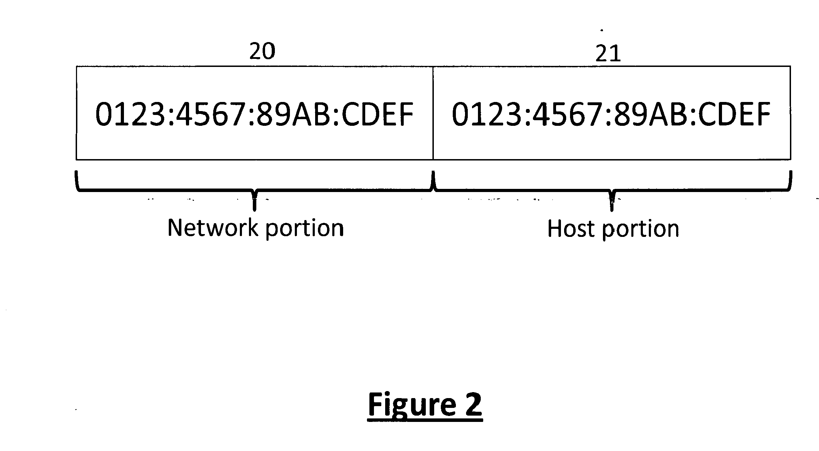

The following description uses addresses in the IPv6 format, which is illustrated in Figure 2. This address format is currently being introduced because the available address space in the 32-bit IPv4 system is now approaching saturation. In IPv6 the address has a 128-bit format (configured as eight hexadecimal numbers, each being between 0 and FFFF - e.g. 123:4567:890A:BCDE:F123.456:7890), allowing 3.4 × 10³⁸ potential addresses-IPv4. The address portion is divided into two parts each of 64 bits - the "network portion" 20 and the "host portion" 21.

The wide range of addresses available under IPv6 allows considerable flexibility for each individual operator to assign the block of IP addresses allocated to it. Only the network portion 20 is actually used to route packets to the destination service provider. This routing data gives some high level data on the destination's position within the network topology, but not on geographic location.

The service provider can therefore allocate the rest of the address (the "host portion" 21 in Figure 2) in whatever way meets its own requirements, and in particular it can be used to encode data known to, or made available to, the service provider responsible for allocating the IP address. By encrypting such data it can be made available only to organisations who are to be trusted with such data. Provision can be made for protecting the privacy of users who do not consent to such information being made available, even in encrypted format, as will be described in detail later.

The embedded data could be used, for example to identify the user's precise location to the emergency services when the user makes a call to them through a voice over IP (VoIP) telephone service. As the data is encrypted, such information need only be made available to the relevant authorities.

Broader and less specific user information could also be embedded with the encrypted IP address. The following is a non-exhaustive list of types of information could be of potential value to the information service provider to better serve its customers when they interact online, by automatically providing users with more appropriate content, on-line format, products or offers.
- Whether the user has, or could be provided with, a fibre broadband service
- The user's available broadband bandwidth
- The user's approximate geographic location
- Which product variants the user has
- Information on customer tenure
- Any special needs, for instance if the user is visually impaired, the website content could be automatically tailored
- If a business customer, what type of business they operate

This information could be made available to trusted and approved third parties in encrypted form, subject to any required user consent, but would remain protected from general availability by a resilient cipher.

For a mobile connection there will be two IP addresses - the "persistent" home IP address and the "current" dynamic care-of address. These may have different data associated with them, for example information relating to the user's "persistent" IP address may indicate the language in which the requested content should be presented, whilst the "dynamic" address may indicate the user's current location.

The 64 bits in the "host portion" 21 of the IPv6 address format represent more than 10¹⁹ permutations, allowing ample scope to record data relating to the user. Several different categories of data may be stored for different purposes, using different ciphers for the individual parts of the "host portion" representing different information content which can then made available to different users by allowing each one the ciphers to one, some, or all of the levels as appropriate.

A user having access to the cipher(s) can decrypt the information encrypted in any IP address allocated by the service provider - the service provider can be recognized from the network portion of the address, so allowing the information provider to identify whether the address will include encrypted data in the host portion, and which cipher to apply.

If a subscriber chooses to opt out of the system (or chooses not to opt in), the network provider can arrange for the IP address to decode to dummy information. For example, a set of dummy (fictional) values could be provided for use in formulating the IP addresses of such users. Data providers deciphering the IP addresses would identify such dummy values as being from the opted-out range and thus having no significance.

Alternatively, two separate IP address ranges may be allocated, one for opted-in users and a separate one for opted out users. Information providers can then recognise which IP addresses contain useful encrypted data. The routing tables used for routing data packets only use the "plain text" IP address, not the data encrypted therein, so for routing purposes there is no distinction between those IP addresses that contain encrypted data and those that do not.

User session lengths vary considerably, from a few minutes to many days. A new IP address can only be allocated by the address manager 18 when a new session begins, so whenever a cipher is changed, there will be an extensive overlap period when two or more ciphers are in operation. There are a number of ways this can be handled. Firstly, the host portion may include a non-encrypted portion identifying which edition of the cipher is used for the rest of the data.

Alternatively, the encrypted data can include check digits or other redundant information which will not tally if the wrong cipher is used, allowing the user to attempt each cipher until the correct cipher is identified.

Possible encryption schemes that can be used include symmetric cryptography, or random 'pad'. The preferred system is the "symmetric Crypto' Method". In this method there are N intervals, n₁, n₂,..., n_{N}, each with a respective key K₁, K₂,..., K_{N}. The location information is encoded (compressed) to fit in the available size of a message M. A block cipher f(K, M) is applied, where the blocksize fits within the available size. The location part of the address is then {n, f(Kₙ, M), p}, where p is enough random padding to fill the remaining address. The padding also provides for multiple internet addresses having the same data content.

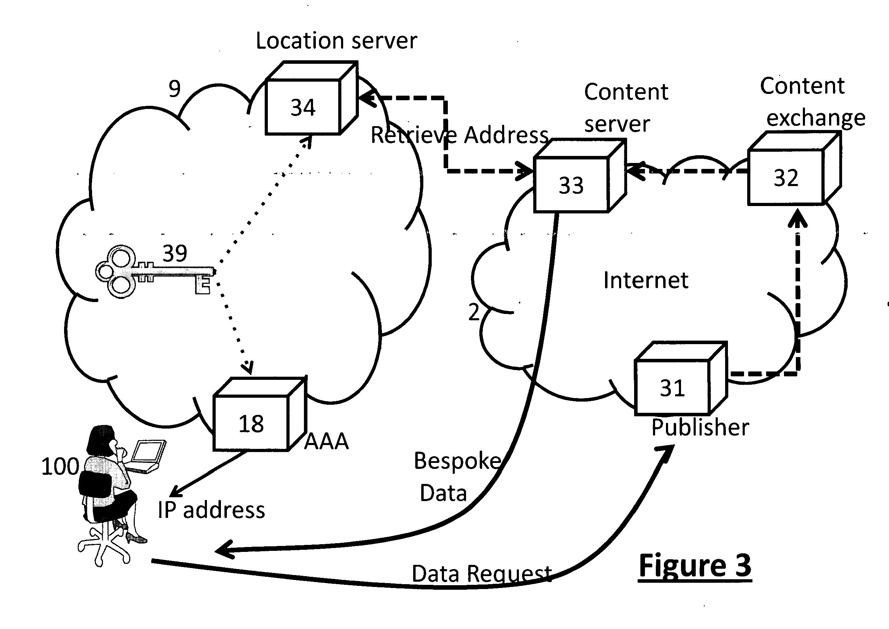

Various options are possible for managing the availability of the ciphers, to ensure that only authorized users have access to the ciphers and thus to the encrypted data. Figures 3, 4 and 5 illustrate three possibilities.

In all these cases the network provider 9 uses an address allocation application (AAA) 18 to provide a user 100 with an IP address. This address is attached to any data requests transmitted by the user 100 to identify the origin of the request and thus the network address to which the requested data should be routed over the internet 9. As is well known, the network address is determined by the routing topology of the network, and each routing node in the Internet maintains routing tables to determine how any packets with a given address should be routed.

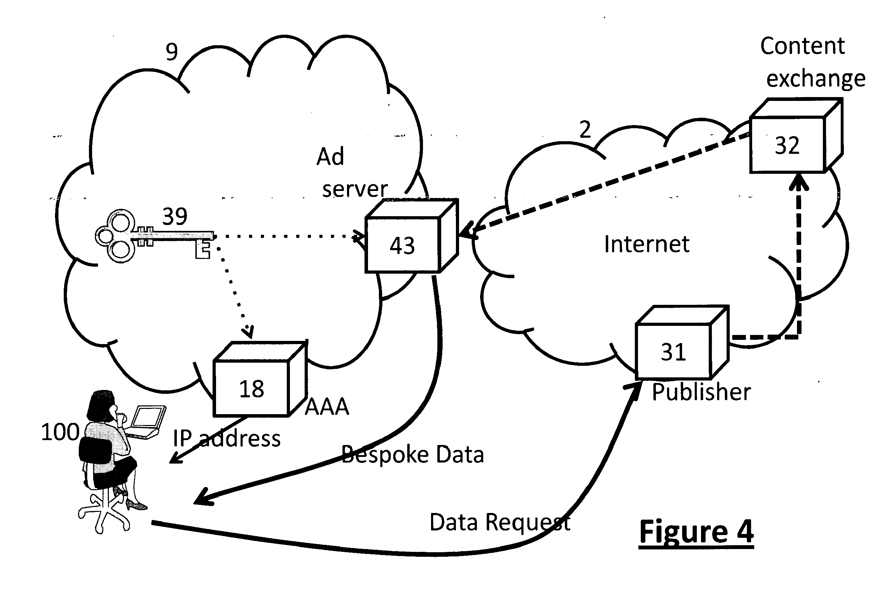

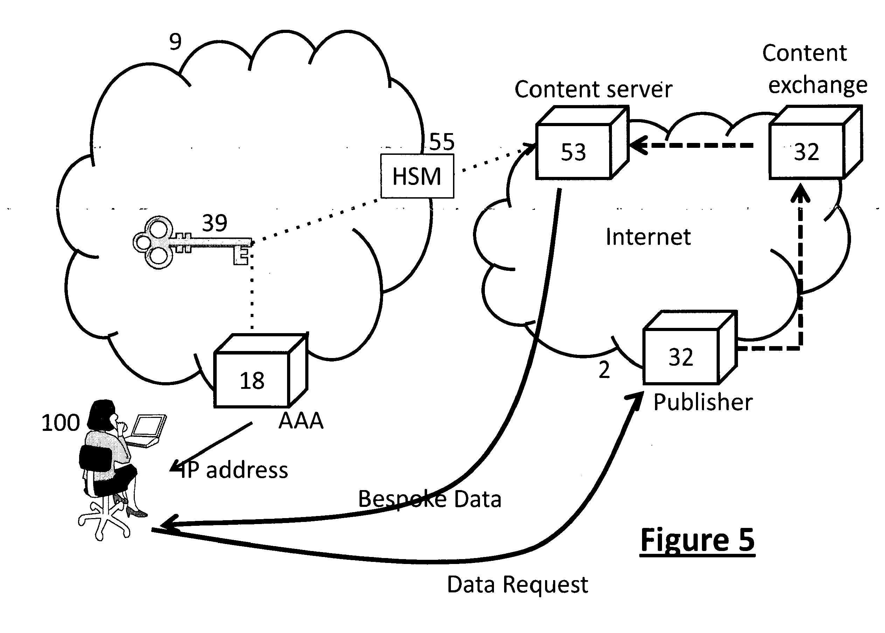

As has already been described, according to the invention, the address allocation application 18 also incorporates encrypted data such as the user's postal address into the network address. This encrypted data can be retrieved either by a private key system, in which the cipher is not disclosed to the information provider, as will be described with reference to the embodiments of Figures 3 and 4, or a shared keying system in which the decryption is performed by the information provider, as shown in Figure 5.

Figures 3 and 4 both depict private keying systems. In these systems the cipher (key) maintained by the network operator is not exposed to third parties.

The network operator either provides a location server 34 (Figure 3) accessible by trusted third party information servers 33, or hosts such information servers 43 itself (Figure 4).

In the first private keying system, shown in Figure 3, the cipher is held by a location server 34 accessible to servers (e.g. 33) operated by authorized users of the service. In the embodiment of Figure 3, when a user 100 accesses content from a publisher 31 using the internet 2, the user's internet address is forwarded to an information-providing host 32. The information-providing host 32 accesses an information-providing server 33 which passes the address over a secure link 35 to the location server 34 in the network operator's core network 9. The location server 34, having checked that the information-providing server 33 is authorized to receive such data, deciphers the address data and returns it to the information-providing server 33. The information-providing server 33 then selects content appropriate to the address data, and delivers the content to the user 100.

The alternative system shown in Figure 4 has an information-providing server 43 hosted by the network operator's core network 9, and therefore itself has access to the cipher so there is no need for a separate location server.

In the alternative, shared-keying system of Figure 5, the ciphers are disclosed to the information-providing host 53, which can thus identify the user data without further interaction with the operator's core network 9. Security of the cipher can be enforced, for example, by provision of the cipher in a Hardware Security Module (HSM) 55, provided to the information provider 53. This module stores the cipher in a tamper-resistant module, and performs decryption without releasing the cipher itself, providing a plain text output of the decrypted data.

## Claims

1. A data network comprising a plurality of addressable nodes (100), an addressing system (16) for generating network addresses for the nodes, a database (18) of node-specific data relating to the addressable nodes, and an encryption system (39) to encrypt the node-specific data in the database (18), wherein the address generation system (16) is arranged to incorporate the encrypted node-specific data as part of a network address.

2. A data network according to claim 1, further comprising a data retrieval function (34, 43) having means to decrypt a network address received from a requesting server (32), in order to retrieve the node-specific data.

3. A data network according to claim 2, wherein the data retrieval function (34) has means to return the retrieved node-specific data to the requesting server (33).

4. A data network according to claim 2, wherein the data retrieval function (43) has means to generate data content in response to the retrieved node-specific data, and to transmit the generated data content to the network address (100) from which the data was retrieved.

5. A data network according to claim 1, further comprising means to transmit a cipher (55) to a server (53) to allow the server to retrieve node-specific data from network addresses associated with data requests received by the server.

6. A data network according to any preceding claim, wherein provision is made to periodically change the cipher in use.

7. A data network according to claim 6, wherein provision is made to include, as part of each network address, an indication of which cipher was used to generate the address.

8. A method for generating network addresses for a plurality of addressable nodes, wherein a database (18) of user data relating to the addressable nodes is maintained, and wherein each network address includes an encrypted version of the user data for the respective node.

9. A method according to claim 8, wherein the encryption process uses a cipher which is changed periodically.

10. A method according to claim 9, wherein each network address includes an indication of which cipher was used to generate the address.

11. A method according to claim 10, wherein the encrypted data includes check data which is arranged to give an error indication if an attempt is made to decrypt the data using a cipher other than the one used to encode the data.

12. A method for recovering user data specific to a network node and encrypted as part of a network address for the network node, by decrypting a network address received from a requesting server (32), in order to retrieve the node-specific data.

13. A method according to claim 12, wherein an indication of the cipher to be used to recover the user data is included as part of each network address.

14. A method according to claim 12, wherein attempts to recover the user data are made using each of a predetermined series of ciphers, until a valid value for the decrypted user data is returned.

15. A method according to claim 12, claim 13, or claim 14 wherein data content is generated in response to the retrieved node-specific user data, transmitted to the network address (100) from which the data was received.
